# EUROPEAN PATENT SPECIFICATION

(11) **EP 2 477 781 B1**
(45) Date of publication and mention of the grant of the patent: **09.10.2019**
(21) Application number: 10747350.6
(22) Date of filing: 11.08.2010
(51) Int. Cl.: B23K 20/12

(54) **FRICTION STIR WELD ASSEMBLY AND ASSOCIATED METHOD FOR MITIGATING DISTORTION IN A FRICTION STIR WELD JOINT**
REIBRÜHRSCHWEISSANLAGE UND ZUGEHÖRIGES VERFAHREN ZUR DISTORSIONSMINDERUNG IN EINER REIBRÜHRSCHWEISSNAHT
INSTALLATION DE SOUDAGE PAR FRICTION-MALAXAGE ET MÉTHODE ASSOCIÉE POUR ATTENUER LES DISTORSIONS DANS LE JOINT DE SOUDAGE

(30) Priority: 18.09.2009 US 562291
(43) Date of publication of application: 25.07.2012
(73) Proprietor: The Boeing Company, Chicago, IL 60606-1596 (US)
(72) Inventor: BAUMANN, John, A., Saint Charles Missouri 63301 (US); LEDERICH, Richard, J., Des Peres Missouri 63131 (US); MATLACK, Michael, P., Saint Charles Missouri 63303 (US); WEINGART, Christopher, M., Saint Peters Missouri 63304 (US); YOUNG, Keith, A., Saint Peters Missouri 63304 (US)
(74) Representative: Howson, Richard Giles Bentham
(86) International application number: PCT/US2010/045208
(87) International publication number: WO 2011/034670

(56) References cited:
- EP-A2- 1 518 632
- WO-A1-03/039804
- WO-A1-2008/109073

## Description

### FIELD

Embodiments of the present invention relate generally to friction stir weld technology and, more particularly, to the mitigation of distortion in a friction stir weld joint.

### BACKGROUND

Friction stir welding may be utilized in order to join two or more workpieces along a friction stir weld joint. In this regard, two or more workpieces may be abutted or overlapped with the region of contact between the two workpieces being engaged by a friction stir weld tool. A friction stir weld tool generally has a tool shoulder and a probe extending therefrom that is rotated and then plunged or otherwise inserted into the region of contact between the two workpieces and moved along a joint line while the probe continues to be rotated.

Frictional heat is generated as a result of the interaction of the rotating friction stir weld tool and the workpieces through which the friction stir weld tool is advanced. The frictional heat causes those portions of the workpieces along the joint line to soften without reaching the melting point, thereby creating plastic deformation with the workpieces being joined along the joint line upon their rehardening.

Friction stir welding introduces strain, however, into the resulting welded assembly. The strain may, in turn, induce distortion of the welded assembly including, for example, bowing and complex buckling, e.g., oil-canning. For example, the strain induced by friction stir welded assembly may cause distortion of the welded assembly due to shrinkage of the plasticized material, that is, shrinkage of the weld nugget, in comparison to the surrounding, unwelded material. The shrinkage of the weld nugget may cause the welded assembly to distort in the direction of the friction stir weld joint, which, in turn, may result in out-of-plane bowing. The distortion in the direction of the friction stir weld joint and the resulting out-of-plane bowing may also place the surrounding material in compression which, in turn, may cause the surrounding material to buckle. The potential for distortion of the welded assembly is particularly significant in conjunction with the friction stir welding of relatively thin materials. In this regard, less distortion is generally created by the friction stir welding of more rigid materials than the friction stir welding of less rigid materials. Since rigidity is directly proportional to the thickness of a given material, friction stir welding is accordingly more apt to create distortion in thinner materials than in thicker materials.

The distortion of a welded assembly may create difficulty during assembly of the welded component. For example, friction stir welding may be utilized in order to form portions of an aircraft with the assembly of those portions being more difficult in instances in which the friction stir welded portions are distorted. In addition to the potential distortion of the welded assembly and the corresponding difficulties with subsequent assembly of the distorted assembly, the internal residual stress that may be created by a friction stir weld joint may also reduce the fatigue strength and static strength of the resulting welded assembly which, in turn, may adversely affect the performance of the resulting assembly.

A number of techniques have been proposed in an effort to eliminate or reduce friction stir weld-induced distortion. With respect to eliminating friction stir weld-induced distortion in the first instance, techniques have been developed to improve the methods by which the workpieces are clamped during the friction stir welding process, to reduce the movement of the pieces of material during or following friction stir welding, to friction stir weld the pieces of material under a compression or tensioning arrangement, and to rapidly quench the welded assembly during or relatively immediately following the friction stir weld process. In addition, techniques have been developed that preheat and expand the workpieces prior to friction stir welding, thereby preforming the parts prior to friction stir welding so that the shape of the welded assembly is balanced between the prestressed state and post-weld stress state. However, techniques that are implemented prior to friction stir welding or during the friction stir welding process that are intended to counterbalance the weld-induced stresses have proven relatively difficult to control with sufficient precision in order to fully eliminate net distortion in the welded assembly. These difficulties are exacerbated and the techniques designed to counterbalance weld-induced stresses generally prove even less effective in instances in which a welded assembly includes multiple friction stir weld joints, each of which may induce strain into the welding assembly.

Other techniques have been employed following the formation of a friction stir weld joint in an effort to counterbalance the post-weld stresses induced within the welded assembly. These post-weld techniques include treatments of the entire welded assembly, such as stress-relieving heat treatments, tensioning or stretching of the welded assembly and/or forging of the welded assembly. These post-weld techniques also include treatments that are more localized relative to the friction stir weld joint and the neighboring portions of the workpieces. These more localized techniques include localized thermal-mechanical surface treatments to relieve stress and/or to induce counterbalancing compressive layers, such as peening, burnishing and laser shock peening. The thermal-mechanical treatments that may be employed following formation of a friction stir weld joint generally require relatively high temperatures that are significantly higher than the temperatures employed for an aging process that may otherwise be employed for strength and metallurgical stabilization. These relatively high temperatures that would be required for thermal-based post-weld treatment may be deleterious to coatings, surface treatments and/or other aspects of the welded assembly. In addition, the thermal-mechanical surface treatment techniques that may be employed in an effort to relieve weld-induced stress, such as peening, burnishing and laser shock peening, may require relatively expensive hardware systems that require a trained and experienced technician for proper operation. In addition, such thermal-mechanical surface treatment techniques may require a plurality of passes over the same section of the welded assembly to be effective, thereby increasing the time required for and decreasing the efficiency of these techniques. Moreover, such surface treatment techniques may only plastically deform the material that is relatively near to the surface and, as such, may only correct relatively small amounts of distortion.

Document WO-A-2008/109073 is entitled "Method and apparatus to relieve residual stress or distortion in a heat processed article by applying first heat and then pressure", and its abstract reads a method and apparatus to apply pressure to a heated or weld region of a workpiece to relieve residual stress and distortion. In illustrated embodiments, heat is supplied via a probe that traverses a workpiece to heat a region of the workpiece. Pressure is applied to the heated region following the application of heat. In illustrated embodiments, pressure is supplied via a roller assembly, which is configured to traverse the workpiece to apply pressure to the heated or weld regions.

As such, it may be desirable to provide improved techniques for mitigating the distortion created by a friction stir welding process. In this regard, it may be desirable to provide an improved technique for counteracting the strain introduced into a welded assembly by a friction stir welding process in order to reduce the weld-induced distortion, such as out-of-plane bowing and complex buckling, e.g., oil-canning.

### SUMMARY

According to an aspect of the disclosure, there is provided:
A method of mitigating distortion in a friction stir weld joint, the method comprising:
forming a friction stir weld joint in a workpiece, wherein forming the friction stir weld joint comprises securing the workpiece upon a platform with a holding fixture, and forming the friction stir weld joint with a friction stir weld assembly that is configured to direct a friction stir weld tool along a predefined weld path while applying a predefined force, wherein the friction stir weld assembly includes an end effector and the method further comprises engaging and holding the friction stir weld tool with the end effector during the formation of the friction stir weld joint;
disengaging the end effector from the friction stir weld tool; and
applying force to the workpiece following formation of and along at least a portion of the friction stir weld joint in order to reduce the distortion of the workpiece, wherein applying force comprises securing the workpiece upon the platform with the holding device, and, with the end effector, engaging a roller with the friction stir weld assembly that is also configured to apply a compressive force by moving the roller along the predefined weld path while applying a predetermined force.

The method may further comprise directing the friction stir weld tool and the roller along the predefined weld path in accordance with a common weld path definition.

Applying force may further comprise applying force with a hardened cylindrical roller with chamfered edges.

Applying force may further comprise inducing plastic deformation along at least a portion of the friction stir weld joint.

Inducing plastic deformation may comprise elongating the workpiece along at least a portion of the friction stir weld joint.

The method may further comprise supporting the workpiece during movement of both the friction stir weld tool and the roller along the predefined weld path.

According to a further aspect of the disclosure, there is provided:
A friction stir weld assembly comprising:
a platform and a holding fixture configured to secure a workpiece to the platform during friction stir welding operations;
a friction stir weld tool;
a controller configured to direct the friction stir weld tool along a predefined weld path while applying a predefined force to form a friction stir weld joint;
a roller, wherein the controller is also configured to direct the roller along the predefined weld path while the workpiece is secured to the platform by the holding fixture and while applying a predefined force in order to reduce the distortion of the workpiece; and
an end effector configured to alternately engage and hold the friction stir weld tool during the formation of the friction stir weld joint and engage the roller during application of force to the friction stir weld joint.

The controller may be configured to direct movement of both the friction stir weld tool and the roller in accordance with a common weld path definition.

The roller may comprise a hardened, cylindrical roller having chamfered edges.

The controller may be configured to apply the predefined force in order to induce plastic deformation along at least a portion of the friction stir weld joint.

The controller may be configured to induce plastic deformation in order to elongate the workpiece along at least a portion of the friction stir weld joint.

The platform may comprise a backing member to support the workpiece during movement of both the friction stir weld tool and the roller along the predefined weld path.

The features, functions and advantages that have been discussed can be achieved independently in various embodiments of the present invention or may be combined in yet other embodiments, further details of which can be seen with reference to the following description and drawings.

### DESCRIPTION OF THE DRAWINGS

Figure 1 is a perspective view of a friction stir weld assembly in accordance with one embodiment of the present invention;
Figure 2 is a perspective view of welded assembly having a friction stir weld joint and associated out-of-plane bowing and complex buckling;
Figure 3 is a perspective view of a roller assembly in accordance with one embodiment of the present invention;
Figure 4 is a more detailed plan view of a roller in accordance with one embodiment of the present invention; and
Figure 5 is a flowchart of operations performed in accordance with one embodiment of the present invention.

### DETAILED DESCRIPTION

The present inventions now will be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

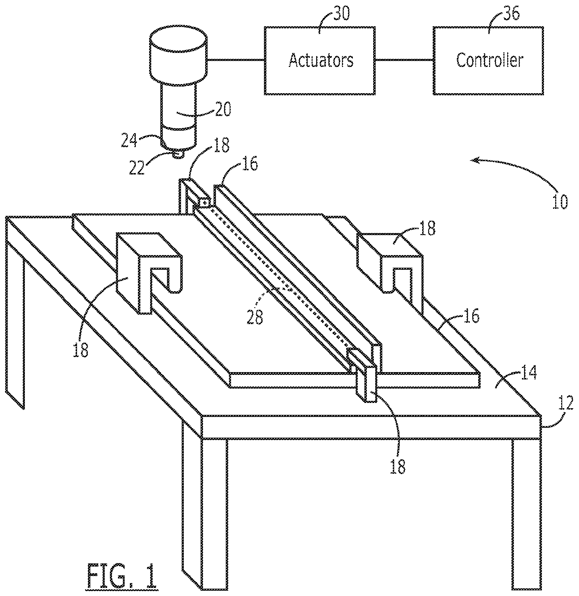

Referring now to Figure 1, a friction stir weld assembly 10 in accordance with one embodiment of the present invention is depicted. As shown, the friction stir weld assembly includes a platform 12 having a backing member 14 for supporting the workpieces 16. For example, the backing member may be a table or other support surface that is formed of a material, such as steel in instances in which aluminum alloys are friction stir welded, that is configured to remain rigid while subjected to the forces and other processing conditions that are applied to the workpieces during formation of a friction stir weld joint and thereafter during the application of force along the friction stir weld joint. In the illustrated embodiment, the workpieces include a sheet and a stringer that is disposed upon and extends across the sheet. The sheet and the stringer of this embodiment may be formed of aluminum or titanium alloys, for example. However, the friction stir weld assembly can be utilized to process a wide variety of other workpieces that are formed of a number of different materials and that are abutted or overlapped in a variety of manners.

The friction stir weld assembly 10 of Figure 1 also includes a holding fixture 18, such as one or more clamps, configured to releasably secure the workpieces 16 to the platform 12, such as to the backing member 14. The friction stir weld assembly of the embodiment of Figure 1 also includes a friction stir weld tool 20. The friction stir weld tool of one embodiment includes a probe 22 that extends at a distal end of the friction stir weld tool beyond a shoulder 24. However, the friction stir weld tool may have other configurations, if so desired.

The friction stir weld assembly 10 includes a controller 26 configured to direct the friction stir weld 20 tool along a predefined path while applying a predefined force to thereby form a friction stir weld joint in the workpiece 16. In this regard, the controller may be a processor or other computing device that either includes a memory device or is otherwise in communication with a memory device which stores the definition of the predefined weld path, such as in terms of a series of coordinates, as well as a definition of the predefined force to be applied to the workpieces. The controller of one embodiment is configured to operate in accordance with and under the control of a computer program consisting of a plurality of computer program instructions that, in one embodiment, may also be stored by the memory device.

In operation, the controller 26 may position the friction stir weld tool 20 at an initial location and may cause the friction stir weld tool to begin rotating. As indicated by Figure 1, the friction stir weld assembly 10 may also include a plurality of actuators 30 that may be directed by the controller to appropriately move the friction stir weld tool. For example, under the direction of the controller, the actuators may be configured to cause the friction stir weld tool to rotate and/or to move to certain positions while applying predetermined amounts of force. As such, subsequent discussion regarding the controller directing the friction stir weld tool to move in certain manners may, in one embodiment, actually include the controller directing the actuators to cause the friction stir weld tool to move in certain manners. In the illustrated embodiment, once the friction stir weld tool is rotating, the controller may direct the friction stir weld tool to move toward the workpieces 16 such that the probe 22 is plunged into the workpieces. The controller may then direct the friction stir weld tool to move along a predefined weld path 28 (shown in dashed lines in Figure 1) while continuing to cause the probe to be rotated and to remain in contact with and, indeed, to remain plunged into the workpieces. Upon reaching the final position of the predefined weld path, the controller can direct the friction stir weld tool to withdraw from the workpieces, thereby removing the probe from the workpieces. Upon rehardening of the portions of the workpieces that have been plasticized during the friction stir welding process, the workpieces will be joined along a friction stir weld joint that follows the predefined weld path.

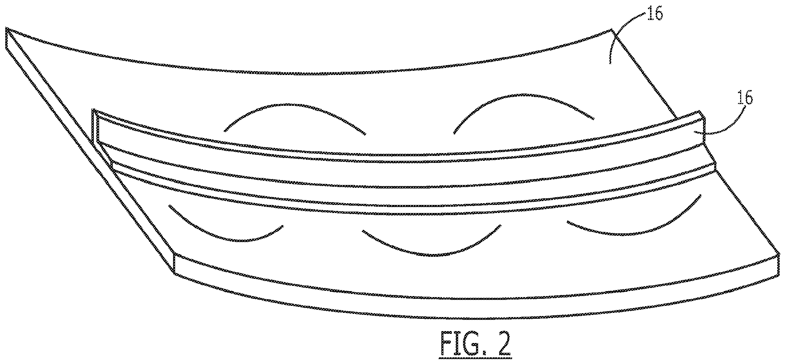

As described above, friction stir welding may introduce strain into the resulting welded assembly which, in turn, may induce distortion of the welded assembly including, for example, bowing and complex buckling, e.g., oil canning. For example, Figure 2 depicts a welded assembly in which a pair of workpieces 16 have been joined by a friction stir weld joint. As shown, the welded assembly is bowed and also exhibits complex buckling (schematically illustrated by the arcuate lines on either side of the friction stir weld joint) in at least portions of the workpieces proximate friction stir weld joint. While the welded assembly of the illustrated embodiment is bowed in a concave upward manner, the welded assembly may be otherwise bowed, such as in a concave downward manner.

In order to reduce the distortion introduced by the friction stir welding process, force may be applied to the workpieces 16 along at least a portion of the friction stir weld joint. In this regard, the force that is applied is sufficient to induce plastic deformation along at least the portion of the friction stir weld joint. By inducing plastic deformation, the distortion of the workpieces is reduced, if not eliminated. Moreover, by inducing the plastic deformation that reduces the distortion of the workpiece, the strength of the welded assembly, such as the fatigue strength and/or the static strength, may also be improved so as to thereby enhance the performance of the resulting welded assembly.

In accordance with the invention, the force is applied to the workpieces 16 by moving a roller 40 along at least a portion of the friction stir weld joint so as to apply a compressive force thereto. The roller is engaged by and the force is applied by the same friction stir weld assembly 10 that previously formed the friction stir weld joint. As such, the workpieces may remain engaged by the same friction stir weld assembly both during the formation of the friction stir weld joint and the subsequent application of force along the friction stir weld joint so as to reduce any resulting distortion in the welded assembly. By utilizing the same friction stir weld assembly, the overall process of forming the friction stir weld joint and then reducing the distortion of the workpieces may be performed efficiently without much, if any, manual intervention and in a manner that provides accurate results since the alignment of the workpieces to the friction stir weld assembly is maintained and, indeed, may remain the same throughout both the friction stir weld process and the subsequent application of force for the reduction of distortion within the workpieces.

The friction stir weld assembly 10 of one embodiment includes force-measurement and force-feedback control systems. For example, the force-feedback control system may be embodied by the controller 26. These force-measurement and force-feedback control systems permit the force that is applied to the workpieces 16 during the formation of the friction stir weld joint to be measured and then adjustably controlled, such as in a precise manner. By utilizing the same friction stir weld assembly during the movement of the roller along the friction stir weld joint, the friction stir weld assembly including the controller may also measure the force applied by the roller and then adjustably control the force, also such as in a precise manner.

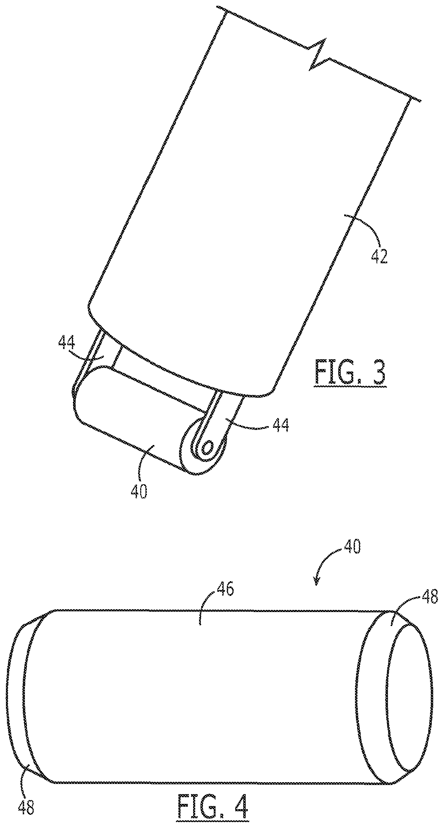

In this embodiment, the welded assembly continues to be secured to the platform 12 and supported by the backing member 14 during the application of force along the friction stir weld joint. In this regard, the welded assembly may remain secured to the platform, such as by means of the holding devices 18 both during the application of force to the workpieces and during the prior formation of the friction stir weld joint. In contrast to the friction stir weld tool 20 that is utilized during the formation of the friction stir weld joint, the friction stir weld assembly 10 engages a roller 40 during the application of force to at least a portion of the friction stir weld joint. In this regard, the friction stir weld assembly includes an end effector that engages and holds the friction stir weld tool during the formation of the friction stir weld joint, such as shown in Figure 1. Following formation of the friction stir weld joint, however, the end effector is disengaged from the friction stir weld tool and, instead, engages a roller tool, such as shown in Figure 3. Thus, the friction stir weld assembly of one embodiment of the present invention alternately engages a friction stir weld tool during formation of the friction stir weld joint and a roller tool during application of force to the friction stir weld joint.

The roller tool of one embodiment depicted in Figure 3 may include a handle 42 or shaft and a roller 40 rotatably mounted at one end thereof, such as by means of a pair of arms 44. The end effector may therefore grasp and engage the handle or shaft while permitting the roller to be disposed in contact with the welded assembly. As shown in Figures 3 and 4, the roller of one embodiment includes a generally cylindrical body 46 and is mounted at its opposed ends to the handle or shaft such that the roller may rotate about its longitudinal axis. As also depicted in Figure 4, the roller may include chamfered end portions 48 and may be formed of a hardened material, such as steel. Although the roller may be fabricated in various manners, the roller of one embodiment has a diameter that is greater than its length, such as more than 2 times greater than its length and, in one embodiment, between 2 and 3 times greater than its length. For example, the roller of one embodiment may be 1.5 inches in diameter and may have a length of 0.6 inches as measured along its longitudinal axis.

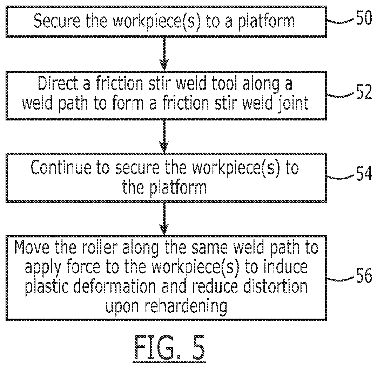

In operation, the workpieces 16 are secured to the platform 12 and a friction stir weld tool 20 is directed by the controller 26 along a predefined weld path 28 to form a friction stir weld joint, as shown in Figure 1 and in operations 50 and 52 of Figure 5. In order to mitigate the distortion that may have been created during the formation of the friction stir weld joint, the welded assembly is positioned upon the platform and force is applied along at least a portion of the friction stir weld joint. As described above and as noted in operation 54 of Figure 5, the welded assembly may remain secured in the same configuration to the same platform as in the friction stir welding process. However, other factors may impact the manner in which the welded assembly is secured upon the platform. For example, as a result of the distortion that may occur following formation of the friction stir weld joint, such as the out-of-plane bowing and complex buckling, the resulting welded assembly may be concave downward or concave upward relative to the platform. While the force may be applied, such as by means of a roller 40, to either side of the welded assembly along the friction stir weld joint, the method and friction stir weld assembly of one embodiment of the present invention is configured to apply force to the workpiece along the friction stir weld joint while the workpiece is supported upon the platform in a concave downward configuration. The distortion of the workpiece and, consequently, the manner in which the force is most effectively applied to the workpiece to reduce the distortion of the workpiece may also be partially dependent upon the configuration of the welded assembly. In one embodiment in which the welded assembly includes a stringer on one surface of the welded assembly as shown, for example, in Figure 2, the method and friction stir weld assembly 10 of one embodiment may apply the force along the friction stir weld joint on the stringer side of the welded assembly in order to remove a greater degree of the distortion of the workpiece.

Once the welded assembly has been secured to the platform 12, the controller 26 may be configured to position the roller 40 at an initial position, such as the same initial position that was utilized for the friction stir weld tool 20 during the formation of the friction stir weld joint. The controller may then move the roller into contact with the workpieces 16. In embodiments in which the initial position of the roller and the initial position of the friction stir weld tool are identical, the controller will therefore have positioned the roller in contact with the welded assembly at one end of the friction stir weld joint. The controller may then be configured to move the roller along a predefined path. In this regard, the controller of one embodiment is configured to move the roller along the same predefined weld path 28 as that utilized during the formation at the friction stir weld joint. See operation 56 of Figure 5. As such, the controller may move both the friction stir weld tool and the roller along the same predefined weld path that is defined by a common weld path definition, such as the same series of coordinate points stored, for example, by the memory device. By utilizing a common weld path definition, the controller may therefore ensure that the roller moves along the friction stir weld joint and does not deviate therefrom.

In addition to moving the roller 40 along the friction stir weld joint, the controller 26 is also configured to apply a predefined amount of compressive force to the welded assembly as the roller moves along the friction stir weld joint, generally at a predefined velocity. Upon the roller reaching a final point, such as the same final point that defines an end of the friction stir weld joint, the controller may lift or otherwise remove the roller from contract with the welded assembly.

As a result of the application of compressive force applied by the roller 40 along at least a portion of the friction stir weld joint, plastic deformation is induced along at least that portion of the friction stir weld joint. The plastic deformation, in turn, causes the distortion of the workpieces 16 including both the out-of-plane bowing and the complex buckling, e.g., oil canning, to be reduced, if not eliminated. Indeed, the plastic deformation that is induced by the roller within at least that portion of the friction stir weld joint may cause the workpieces to elongate along at least that portion of the friction stir weld joint, thereby reducing the distortion of the workpieces.

The amount of force to be applied to the workpieces 16 may vary depending upon a number of factors including the material properties of the workpieces that are joined by the friction stir weld joint, the thickness of the friction stir weld joint, the extent of the distortion of the workpieces including out-of-plane bowing and complex buckling, and the like. In addition, the amount of force to be applied by the roller 40 and the other related parameters, such as the speed at which the roller traverses the friction stir weld joint, may be determined by conducting a series of tests on sample workpieces and then identifying the most appropriate combination of force and speed for a sample workpieces that is distorted in the same fashion and that has the same material properties and is of the same thickness as the workpieces to be joined by a friction stir weld joint. Although the friction stir weld assembly may be configured to apply a wide variety of forces to the friction stir weld joint, the friction stir weld assembly 10 of one embodiment applies between about 680 kg (1500 pounds) and about 2041 kg (4500 pounds) to the workpieces. By controlling the force, the force applied to the workpiece may remain within a predefined range, such as within 5% and, in one embodiment, within 1%, of a predefined force level along the length of the friction stir weld joint. Also, although the friction stir weld assembly may be configured to move the roller along the friction stir weld joint at any of a variety of speeds, the friction stir weld assembly of one embodiment is configured to move the roller at 8 inches per minute along the friction stir weld joint.

Following the application of the force along the friction stir weld joint, and the removal of the roller 40 from the welded assembly, the holding devices 18 may release the welded assembly and the welded assembly may be removed from the platform 12. Since the distortion of the welded assembly has been reduced, if not eliminated, the welded assembly can be more readily assembled or integrated with other substructures since the welded assembly will now have been fabricated with improved tolerances. Additionally, the resulting welded assembly may have improved strength, such as improved fatigue strength and/or static strength, as a result of the reduction in the internal stresses occasioned by the reduction in the distortion of the workpiece. Further, in conventional applications, friction stir welding conditions and parameters may be established as a compromise between joint properties and distortion. In accordance with embodiments of the present invention, the friction stir welding conditions and parameters may be selected so as to produce stronger welds but larger distortion with the subsequent application of force, such as by means of a roller moved along the friction stir weld joint, reducing or eliminating the distortion, but maintaining the strength.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims.

## Claims

1. A method of mitigating distortion in a friction stir weld joint, the method comprising:
forming a friction stir weld joint in a workpiece (16), wherein forming the friction stir weld joint comprises securing the workpiece (16) upon a platform (12) with a holding fixture (18), and forming the friction stir weld joint with a friction stir weld assembly (10) that is configured to direct a friction stir weld tool (20) along a predefined weld path while applying a predefined force, wherein the friction stir weld assembly includes an end effector and the method further comprises engaging and holding the friction stir weld tool (20) with the end effector during the formation of the friction stir weld joint;
the method being **characterized by**:
disengaging the end effector from the friction stir weld tool; and
applying force to the workpiece (16) following formation of and along at least a portion of the friction stir weld joint in order to reduce the distortion of the workpiece (16), wherein applying force comprises securing the workpiece (16) upon the platform (12) with the holding device, and, with the end effector, engaging a roller (40) with the friction stir weld assembly that is also configured to apply a compressive force by moving the roller (40) along the predefined weld path while applying a predetermined force.

2. A method according to Claim 1 further comprising directing the friction stir weld tool (20) and the roller (40) along the predefined weld path in accordance with a common weld path definition.

3. A method according to Claim 1 or 2 wherein applying force further comprises applying force with a hardened cylindrical roller (46) with chamfered edges (48).

4. A method according to Claim 1 or 2 wherein applying force further comprises inducing plastic deformation along at least a portion of the friction stir weld joint.

5. A method according to Claim 4 wherein inducing plastic deformation comprises elongating the workpiece (16) along at least a portion of the friction stir weld joint.

6. A method according to any preceding claim further comprising supporting the workpiece during movement of both the friction stir weld tool (20) and the roller (40) along the predefined weld path.

7. A friction stir weld assembly (10) comprising:
a platform (12) and a holding fixture (18) configured to secure a workpiece (16) to the platform (12) during friction stir welding operations;
a friction stir weld tool (20);
a controller (36) configured to direct the friction stir weld tool (20) along a predefined weld path while applying a predefined force to form a friction stir weld joint;
a roller (40),
**characterized in that**
the controller (36) is also configured to direct the roller (40) along the predefined weld path while the workpiece (16) is secured to the platform (12) by the holding fixture (18) and while applying a predefined force in order to reduce the distortion of the workpiece; and
an end effector configured to alternately engage and hold the friction stir weld tool (20) during the formation of the friction stir weld joint and engage the roller during application of force to the friction stir weld joint.

8. A friction stir weld assembly (10) according to Claim 7 wherein the controller (36) is configured to direct movement of both the friction stir weld tool (20) and the roller (40) in accordance with a common weld path definition.

9. A friction stir weld assembly (10) according to Claim 7 or 8 wherein the roller (40) comprises a hardened, cylindrical roller (46) having chamfered edges (48).

10. A friction stir weld assembly (10) according to Claim 7 wherein the controller (36) is configured to apply the predefined force in order to induce plastic deformation along at least a portion of the friction stir weld joint.

11. A friction stir weld assembly (10) according to Claim 10 wherein the controller (36) is configured to induce plastic deformation in order to elongate the workpiece (16) along at least a portion of the friction stir weld joint.

12. A friction stir weld assembly (10) according to any preceding claim wherein the platform (12) comprises a backing member (14) to support the workpiece (16) during movement of both the friction stir weld tool (20) and the roller (40) along the predefined weld path.

## Patentansprüche

1. Verfahren zur Verminderung von Verzug in einer Reibrührschweißverbindung, wobei das Verfahren aufweist:
Ausbilden einer Reibrührschweißverbindung in einem Werkstück (16), wobei das Ausbilden der
Reibrührschweißverbindung ein Befestigen des Werkstücks (16) auf einer Plattform (12) mit einer Aufnahme (18) und ein Ausbilden der Reibrührschweißverbindung mit einer Reibrührschweißbaugruppe (10), die dazu ausgestaltet ist, ein Reibrührschweißwerkzeug (20) über einen vordefinierte Schweißweg zu führen, während eine vordefinierte Kraft aufgebracht wird, aufweist, wobei die Reibrührschweißbaugruppe einen Endeffektor beinhaltet und das Verfahren ferner ein In-Eingriff-Bringen und Halten des Reibrührschweißwerkzeugs (20) mit dem Endeffektor während der Ausbildung der Reibrührschweißverbindung aufweist;
wobei das Verfahren **gekennzeichnet ist durch**:
Lösen des Endeffektors von dem Reibrührschweißwerkzeug; und
Aufbringen von Kraft auf das Werkstück (16) nach Ausbildung von und entlang mindestens eines Abschnitts der Reibrührschweißverbindung, um den Verzug des Werkstücks (16) zu reduzieren, wobei das Aufbringen einer Kraft ein Befestigen des Werkstücks (16) auf der Plattform (12) mit der Haltevorrichtung und ein In-Eingriff-Bringen einer Walze (40) mit der Reibrührschweißbaugruppe mit dem Endeffektor, das auch dazu ausgestaltet ist, eine Druckkraft aufzubringen, indem die Walze (40) entlang des vordefinierten Schweißwegs bewegt wird, während eine vorbestimmte Kraft aufgebracht wird, aufweist.

2. Verfahren nach Anspruch 1, ferner aufweisend ein Führen des Reibrührschweißwerkzeugs (20) und der Walze (40) entlang des vordefinierten Schweißwegs gemäß einer üblichen Schweißwegdefinition.

3. Verfahren nach Anspruch 1 oder 2, wobei ein Aufbringen einer Kraft ferner ein Aufbringen einer Kraft mit einer gehärteten Zylinderwalze (46) mit abgeschrägten Kanten (48) aufweist.

4. Verfahren nach Anspruch 1 oder 2, wobei ein Aufbringen einer Kraft ferner ein Induzieren einer plastischen Verformung entlang mindestens eines Abschnitts der Reibrührschweißverbindung aufweist.

5. Verfahren nach Anspruch 4, wobei ein Induzieren einer plastischen Verformung ein Verlängern des Werkstücks (16) entlang mindestens eines Abschnitts der Reibrührschweißverbindung aufweist.

6. Verfahren nach einem der vorhergehenden Ansprüche, ferner aufweisend Stützen des Werkstücks während der Bewegung sowohl des Reibrührschweißwerkzeugs (20) als auch der Walze (40) entlang des vordefinierten Schweißwegs.

7. Reibrührschweißbaugruppe (10), aufweisend:
eine Plattform (12) und eine Aufnahme (18), die dazu ausgestaltet ist, ein Werkstück (16) an der Plattform (12) während Reibrührschweißvorgängen zu befestigen;
ein Reibrührschweißwerkzeug (20);
eine Steuerung (36), die dazu ausgestaltet ist, das Reibrührschweißwerkzeug (20) entlang eines vordefinierten Schweißwegs zu führen, während eine vordefinierte Kraft aufgebracht wird, um eine Reibrührschweißverbindung auszubilden;
eine Walze (40),
**dadurch gekennzeichnet, dass**
die Steuerung (36) auch dazu ausgestaltet ist, die Walze (40) entlang des vordefinierten Schweißwegs zu führen, während das Werkstück (16) durch die Aufnahme (18) an der Plattform (12) befestigt ist und während eine vordefinierte Kraft aufgebracht wird, um den Verzug des Werkstücks zu reduzieren; und
ein Endeffektor, der dazu ausgestaltet ist, während der Ausbildung der Reibrührschweißverbindung wechselweise in das Reibrührschweißwerkzeug (20) einzugreifen und es zu halten und während des Aufbringens einer Kraft auf die Reibrührschweißverbindung in die Walze einzugreifen.

8. Reibrührschweißbaugruppe (10) nach Anspruch 7, wobei die Steuerung (36) dazu ausgestaltet ist, die Bewegung sowohl des Reibrührschweißwerkzeugs (20) als auch der Walze (40) gemäß einer üblichen Schweißwegdefinition zu führen.

9. Reibrührschweißbaugruppe (10) nach Anspruch 7 oder 8, wobei die Walze (40) eine gehärtete Zylinderwalze (46) mit abgeschrägten Kanten (48) aufweist.

10. Reibrührschweißbaugruppe (10) nach Anspruch 7, wobei die Steuerung (36) dazu ausgestaltet ist, die vordefinierte Kraft aufzubringen, um eine plastische Verformung entlang mindestens eines Abschnitts der Reibrührschweißverbindung zu induzieren.

11. Reibrührschweißbaugruppe (10) nach Anspruch 10, wobei die Steuerung (36) dazu ausgestaltet ist, durch Induzieren einer plastischen Verformung, das Werkstück (16) entlang mindestens eines Abschnitts der Reibrührschweißverbindung zu verlängern.

12. Reibrührschweißbaugruppe (10) nach einem der vorhergehenden Ansprüche, wobei die Plattform (12) ein Unterstützungselement (14) aufweist, um das Werkstück (16) während einer Bewegung sowohl des Reibrührschweißwerkzeugs (20) als auch der Walze (40) entlang des vordefinierten Schweißwegs zu unterstützen.

## Revendications

1. Procédé de réduction des déformations dans un joint soudé par friction-malaxage, le procédé comprenant de :
former un joint soudé par friction-malaxage dans une pièce d'usinage (16), former le joint soudé par friction-malaxage comprenant de fixer la pièce d'usinage (16) sur une plateforme (12) avec une fixation (18) et de former le joint soudé par friction-malaxage avec un montage de soudage par friction-malaxage (10) conçu pour diriger un outil de soudage par friction-malaxage (20) le long d'un chemin de soudage prédéfini tout en appliquant une force prédéfinie, le montage de soudage par friction-malaxage incluant un actionneur terminal, et le procédé comprenant en outre d'engager et de maintenir l'outil de soudage par friction-malaxage (20) avec l'actionneur terminal pendant la formation du joint soudé par friction-malaxage ;
le procédé étant **caractérisé par** :
le désengagement de l'actionneur terminal de l'outil de soudage par friction-malaxage ; et
l'application d'une force à la pièce d'usinage (16) après la formation et le long d'au moins une partie du joint soudé par friction-malaxage afin de réduire la déformation de la pièce d'usinage (16), appliquer une force comprenant de fixer la pièce d'usinage (16) sur la plateforme (12) avec la fixation et, avec l'actionneur terminal, engager un rouleau (40) sur le joint soudé par friction-malaxage qui est également conçu pour appliquer une force de compression par déplacement du rouleau (40) le long d'un chemin de soudage prédéfini tout en appliquant une force prédéfinie.

2. Procédé selon la revendication 1, comprenant en outre de diriger l'outil de soudage par friction-malaxage (20) et le rouleau (40) le long d'un chemin de soudage prédéfini selon une définition commune du chemin de soudage.

3. Procédé selon la revendication 1 ou 2, dans lequel appliquer une force comprend en outre d'appliquer une force avec un rouleau cylindrique durci (46) aux bords chanfreinés.

4. Procédé selon la revendication 1 ou 2, dans lequel appliquer une force comprend en outre d'induire une déformation plastique le long d'au moins une partie du joint soudé par friction-malaxage.

5. Procédé selon la revendication 4, dans lequel induire une déformation plastique comprend d'allonger la pièce d'usinage (16) le long d'au moins une partie du joint soudé par friction-malaxage.

6. Procédé selon l'une quelconque des revendications précédentes, comprenant en outre de soutenir la pièce d'usinage pendant le mouvement à la fois de l'outil de soudage par friction-malaxage (20) et du rouleau (40) le long du chemin de soudage prédéfini.

7. Montage de soudage par friction-malaxage (10) comprenant :
une plateforme (12) et une fixation (18) conçue pour fixer une pièce d'usinage (16) à la plateforme (12) pendant les opérations de soudage par friction-malaxage ;
un outil de soudage par friction-malaxage (20) ;
un contrôleur (36) conçu pour diriger l'outil de soudage par friction-malaxage (20) le long d'un chemin de soudage prédéfini tout en appliquant une force prédéfinie pour former un joint soudé par friction-malaxage ;
un rouleau (40),
**caractérisé en ce que** :
le contrôleur (36) est également conçu pour diriger le rouleau (40) le long du chemin de soudage prédéfini pendant que la pièce d'usinage (16) est fixée à la plateforme (12) par la fixation (18) et pendant l'application d'une force prédéfinie pour réduire la déformation de la pièce d'usinage ; et
un actionneur terminal conçu pour alternativement engager et tenir l'outil de soudage par friction-malaxage (20) pendant la formation du joint soudé par friction-malaxage et engager le rouleau pendant l'application de force au joint soudé par friction-malaxage.

8. Montage de soudage par friction-malaxage (10) selon la revendication 7, dans lequel le contrôleur (36) est conçu pour diriger l'outil de soudage par friction-malaxage (20) et le rouleau (40) le long d'un chemin de soudage prédéfini selon une définition commune du chemin de soudage.

9. Montage de soudage par friction-malaxage (10) selon la revendication 7 ou 8, dans lequel le rouleau (40) comprend un rouleau cylindrique durci (46) aux bords chanfreinés.

10. Montage de soudage par friction-malaxage (10) selon la revendication 7, dans lequel le contrôleur (36) est conçu pour appliquer la force prédéfinie afin d'induire une déformation plastique le long d'au moins une partie du joint soudé par friction-malaxage.

11. Montage de soudage par friction-malaxage (10) selon la revendication 10, dans lequel le contrôleur (36) est conçu pour induire une déformation plastique afin d'allonger la pièce d'usinage (16) le long d'au moins une partie du joint soudé par friction-malaxage.

12. Montage de soudage par friction-malaxage (10) selon l'une quelconque des revendications précédentes, dans lequel la plateforme (12) comprend un élément arrière (14) pour soutenir la pièce d'usinage (16) pendant le mouvement à la fois de l'outil de soudage par friction-malaxage (20) et du rouleau (40) le long du chemin de soudage prédéfini.
